# EUROPÄISCHE PATENTANMELDUNG

(11) **EP 4 431 865 A1**
(43) Veröffentlichungstag der Anmeldung: **18.09.2024**
(21) Anmeldenummer: 24162608.4
(22) Anmeldetag: 11.03.2024
(51) Int. Cl.: G01B 11/02, G01B 11/24

(54) **WERKZEUGVOREINSTELLUNG MIT BILDSCHIRMUNTERSTÜTZER WERKZEUGVERMESSUNG**

(30) Priorität: 17.03.2023 DE 102023106788
(71) Anmelder: Franz Haimer Maschinenbau KG, 86568 Hollenbach-Igenhausen (DE)
(72) Erfinder: Stoffels, Olaf, 33415 Verl (DE); Nisar, Shakeel, 33689 Bielefeld (DE)
(74) Vertreter: Schwarz, Wolfgang

(57) **Zusammenfassung**

Die Erfindung betrifft ein **Verfahren** zum Vermessen eines Werkzeuges, ein **Verfahren** zum Montieren eines Werkzeugs in einem Werkzeughalter, einen **Bildschirm,** eine **Recheneinheit** mit einem solchen Bildschirm und ein **Voreinstellgerät und/oder Schrumpfgerät** mit einem solchen Bildschirm sowie **Verwendungen** eines Bildschirms zum Vermessen eines Werkzeugs.

Um ein Werkzeug möglichst einfach und kostengünstig vermessen zu können, wird vorgeschlagen, dass das Werkzeug unter Verwendung eines Bildschirms als Messmittel vermessen wird.

## Beschreibung

Die Erfindung betrifft ein **Verfahren** zum Vermessen eines Werkzeuges unter Verwendung eines Bildschirms, ein **Verfahren** zum Montieren eines Werkzeugs in einem Werkzeughalter, einen **Bildschirm,** eine **Recheneinheit** mit einem solchen Bildschirm und ein **Voreinstellgerät und/oder Schrumpfgerät** mit einem solchen Bildschirm sowie **Verwendungen** eines Bildschirms zum Vermessen eines Werkzeugs.

Es ist bekannt, Werkzeuge, wie Rotationswerkzeuge oder/und Drehwerkzeuge, insbesondere Fräs- oder Bohrwerkzeuge, in vorgegebenen Soll-Positionen in Werkzeugaufnahmen zu spannen, in welchen das Werkzeug eine bestimmte (axiale) Ausspannlänge bezüglich der Werkzeugaufnahme aufweist bzw. aufweisen soll.

Dazu ist das Wissen über die (genaue) axiale Länge des Werkzeugs hilfreich bzw. notwendig.

Im Stand der Technik sind verschiedene Verfahren und Vorrichtungen zum Vermessen von Werkzeugen, im Speziellen zum Vermessen einer axialen Länge eines Werkzeugs, bekannt.

Die DE 103 17 576 A1 zum Beispiel beschreibt ein Längenmessmodul, mit dessen Hilfe die (axiale) Länge eines Rotationswerkzeugs (vor dem Einspannen) gemessen werden kann. Das Längenmessmodul hat hierzu ein Messstativ mit einem an einer Führung verschiebbaren mechanischen Messglied.

Es ist Aufgabe der Erfindung, ein Verfahren und /oder eine Vorrichtung anzugeben, mittels welchem bzw. welcher ein Werkzeug, insbesondere dessen axiale Länge, einfach und kostengünstig vermessen werden kann.

Diese Aufgabe wird gelöst durch ein **Verfahren** zum Vermessen eines Werkzeuges unter Verwendung eines Bildschirms, ein **Verfahren** zum Montieren eines Werkzeugs in einem Werkzeughalter, einen **Bildschirm,** eine **Recheneinheit** mit einem solchen Bildschirm und ein **Voreinstellgerät und/oder Schrumpfgerät** mit einem solchen Bildschirm sowie **Verwendungen** eines Bildschirms zum Vermessen eines Werkzeugs mit den Merkmalen des jeweiligen unabhängigen Anspruchs.

Vorteilhafte Weiterbildungen der Erfindung sind Gegenstand abhängiger Ansprüche sowie der nachfolgenden Beschreibung - und beziehen sich sowohl auf die Verfahren und die Vorrichtungen sowie auf die Verwendungen.

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Mittel- bzw. Symmetrieachsen hier beschriebener Bauteile/Komponenten - auch in Ansehung der vorliegenden Figuren - zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Das **Verfahren** zum Vermessen eines Werkzeuges unter Verwendung eines Bildschirms sieht vor, dass das Werkzeug unter Verwendung des Bildschirms als Messmittel vermessen wird.

Der **Bildschirm,** insbesondere ein interaktiver Bildschirm, sieht - entsprechend - vor, dass der Bildschirm als Messmittel zum Vermessen eines Werkzeugs eingerichtet ist.

Dabei heißt bzw. bedeutet "Bildschirm als Messmittel", dass der Bildschirm - oder ein bzw. Teile von ihm - ein unmittelbares Messmittel der Vermessung ist.

Anders ausgedrückt, der Bildschirm - oder ein bzw. Teile von ihm - ist "als "Messmittel" unmittelbarer bzw. tatsächlicher Bestandteil der Vermessung.

Demzufolge nicht darunter fallen insbesondere Bildschirme, die nur bloßes Anzeigemittel für (Mess-)Ergebnisse sind und/oder eine Steuer-/Bedienoberfläche zur eine Bedienung einer Vermessung bilden.

Hier - bei solchen nicht darunterfallenden (bloßen Anzeige-/Bedien-)Bildschirmen - würde dann die Messung von einem anderen, separaten Messmittel, wie beispielsweise eine Kamera oder ein Messmodul (vgl. DE 103 17 576 A1), durchgeführt werden. Der Bildschirm ist hier nicht das Messmittel.

Konkret verdeutlicht, ebenso nicht gemeint ist so ein Bildschirm mit - gegebenenfalls zwar integrierter, aber separater - Kamera, welche das Werkzeug (bildtechnisch) aufnimmt -, wobei dann durch eine Bildverarbeitung das Werkzeug unter Verwendung des Kamerabildes vermessen wird - oder ein (separates) Messstativ (vgl. DE 103 17 576 A1), welches neben dem Bildschirm angeordnet ist. Auch hier ist der Bildschirm nicht das eigentliche Messmittel.

Unter "Bildschirm" können insbesondere Computerbildschirme/- displays, Laptopbildschirme/-displays, Tablet Displays - oder entsprechend ähnliche Anzeigegeräte verstanden werden.

"Interaktiver Bildschirm" kann dabei insbesondere verstanden werden als Bildschirm, welcher ein wechselseitiges Aufeinander-Reagieren zwischen Bildschirm und einem "Gegenüber", beispielsweise einer Bedienperson, ermöglicht, beispielsweise sogenannte "Touchscreens".

Unter "Vermessen (eines Werkzeugs)" kann verstanden werden, dass zumindest eine geometrische Information des Werkzeugs durch den Messvorgang erlangt wird. Insbesondere kann hier vorgesehen sein, das eine axiale Länge eines Werkzeugs vermessen wird. Durchmesser, Radien und Ähnliches können auch bei einem Werkzeug gemessen bzw. vermessen werden.

So kann bei einem solchen Vermessen insbesondere vorgesehen werden, dass das Werkzeug in Kontakt mit dem Bildschirm, insbesondere einer Bildschirmoberfläche, gebracht wird und/oder das Werkzeug bei der Vermessung in Kontakt mit dem Bildschirm, insbesondere einer Bildschirmoberfläche, steht. Eine unmittelbare Nähe zum Bildschirm bzw. zu dessen Bildschirmoberfläche mag auch ausreichend für die Vermessung sein.

Nach einer Ausgestaltung ist vorgesehen, dass der Bildschirm eine Messskala aufweist, insbesondere, dass an dem Bildschirm eine Messskala angeordnet ist und/oder dass auf dem Bildschirm eine virtuelle Messskala angezeigt wird, unter Verwendung derer das Werkzeug vermessen wird.

Unter Messskala mag dabei ein Referenzbezugssystem für eine Messgröße, wie beispielsweise eine Länge, verstanden werden, beispielsweise ein metrisches System.

Auch kann vorgesehen sein, dass die Messskale skalierte Bereiche, insbesondere (definierte) Längenbereiche, aufweist, anhand derer das zu vermessende Werkzeug bei der Vermessung bereichsmäßig klassifiziert wird (Skalierung und Klassifizierung von (Längen-)Bereichen).

Wird so beispielsweise bei der Vermessung eines Werkzeuges dem Werkzeug ein bestimmter Bereich (der Messskale) zugeordnet, so kann aus der Definition des zugeordneten Bereichs eine weitergehende Vermessungsinformation, wie ein Längenbereich (bzw. Länge), erlangt werden.

Weiter kann dann auch vorgesehen sein, dass der Bildschirm einen Messschieber aufweist, unter Verwendung dessen das Werkzeug vermessen wird.

Der Messschieber kann ein virtueller Messschieber sein, welcher auf dem Bildschirm angezeigt und/oder welcher interaktiv (am bzw. über den Bildschirm) bedient wird, - oder der Messschieber ist ein Messschieber, welcher mechanisch verschiebbar ist.

Auch kann vorgesehen sein, dass der Bildschirm einen, insbesondere physischen, Anschlag aufweist, unter Verwendung dessen das Werkzeug - beispielsweise in Kombination mit dem virtuellen oder physischen Messschieber des Bildschirms - für die Vermessung positionierbar ist. Insbesondere kann ein solcher Anschlag auch in Kombination mit der Messskala stehen, insbesondere bei dieser eine Referenz bzw. einen Referenzpunkt bilden.

Zweckmäßig ist es hier insbesondere, wenn der, insbesondere physische, Anschlag derart ausgebildet ist, dass Positionierungsfehler ausgeschlossen bzw. vermindert werden können.

Beispielsweise kann hier eine ausreichende Tiefe des (Positionierungs-)Anschlags vermeiden helfen, dass Falschpositionierungen des Werkzeugs am Anschlag, beispielsweise durch Anlage einer Phase des Werkzeugs am (Positionierungs-)Anschlag, zu Messfehlern führen. Auch kann ein solcher (Positionierungs)Anschlag eine vorgegebene geometrische Form haben, welche ein sicheres "Anschlagen" bzw. Positionieren des Werkzeugs an diesem gewährleistet.

In aller einfachster Ausführung kann ein solcher Anschlag beispielsweise eine Fläche an einem Bildschirmrahmen sein.

Zusätzliche weitere - physische, wie auch virtuelle, Anschläge und/oder Positionierungsflächen (auf bzw. an dem Bildschirm), welche die Positionierung eines zu vermessenden Werkzeugs bei der Vermessung erleichtern, können auch vorgesehen werden. So beispielsweise eine (physische) - entsprechend der Messskala (parallel) ausgerichtete Auflagefläche, auf welche Werkzeug bei der Vermessung aufgelegt werden kann.

Weiterhin kann auch vorgesehen sein, dass eine Bildschirmoberfläche des Bildschirms derart mit einer Sensorik, insbesondere einer berührempfindlichen Sensorik - ähnlich, wie bei einem Touchscreen, eingerichtet ist, dass, wenn das Werkzeug mit der Bildschirmoberfläche in Kontakt (oder in dessen unmittelbare Nähe) gebracht ist, das Werkzeug automatisch vermessen wird.

Ferner kann es auch zweckmäßig sein, dass bei der Vermessung des Werkzeugs zusätzlich ein Parallaxenfehler vermieden und/oder korrigiert wird. Hierzu können entsprechende Mittel an dem Bildschirm, wie beispielsweise Spiegel, vorgesehen werden. Auch entsprechende virtuelle Mittel könne vorgesehen sein, wobei hier in der Regel dann die Korrektur des Parallaxenfehlers rechnerisch erfolgt.

Weiterhin kann es auch zweckmäßig sein, dass das Messmittel, insbesondere unter Verwendung eines Referenzkörpers, kalibriert wird.

Ferner ist es insbesondere zweckmäßig, wenn das **Verfahren** zum Vermessen eines Werkzeuges bei einer Werkzeugvoreinstellung und/oder einem Einspannen, insbesondere einem Einspannen bei einer Spannzange oder einem Hydrodehnspannfutter - oder einem Einschrumpfen, eines Werkzeugs in eine Werkzeugaufnahme durchgeführt wird, wobei das Einspannen unter Verwendung der durch das Vermessen gemessenen Größe des Werkzeugs, insbesondere einer gemessenen axialen Länge des Werkzeugs, durchgeführt wird.

Es ist ebenso insbesondere zweckmäßig, wenn der **Bildschirm** (als Messmittel) zu einer Vermessung bzw. zu dem **Verfahren** zum Vermessen eines Werkzeugs eingesetzt bzw. verwendet wird, insbesondere durchgeführt bei einer Werkzeugvoreinstellung und/oder einem Einspannen, insbesondere einem Einspannen bei einer Spannzange oder einem Hydrodehnspannfutter - oder einem Einschrumpfen, eines Werkzeugs in eine Werkzeugaufnahme, wobei das Einspannen unter Verwendung der durch das Verfahren gemessenen Größe des Werkzeugs, insbesondere einer gemessenen axialen Länge des Werkzeugs, durchgeführt wird.

Anders ausgedrückt, ein **Voreinstellgerät und/oder Schrumpfgerät** kann mit dem **Bildschirm** ausgerüstet sein.

Weiterhin ist es auch zweckmäßig eine **Recheneinheit** vorzusehen, beispielsweise bei einem Voreinstell- und/oder Schrumpfgerät, welche Recheneinheit den **Bildschirm** aufweist und/oder in welcher Recheneinheit ablaufbare Programme für das **Verfahren** implementiert sind.

Bei dem **Verfahren** zum Montieren eines Werkzeugs in einem Werkzeughalter ist vorgesehen, dass ein Werkzeug nach besagtem Verfahren vermessen wird, insbesondere eine axiale Werkzeuglänge des Werkzeugs gemessen wird, ein Anschlagselement im Werkzeughalter unter Verwendung des Messergebnisses, insbesondere der axialen Länge, positioniert wird, das Werkzeug auf Anschlag an das Anschlagselement in den Werkzeughalter eingeführt wird und das Werkzeug in der eingeführten Position im Werkzeughalter befestigt wird.

Hier erscheint es insbesondere zweckmäßig, wenn das Montageverfahren in einem kombinierten Werkzeugvoreinstell- und Schrumpfgerät durchgeführt wird.

Die Erfindung zeichnet sich insbesondere dadurch aus, dass sie einfach umsetzbar ist, insbesondere durch Integration in (beispielsweise) bei Voreinstellgeräten und/oder Schrumpfgeräten schon vorhandenen Bildschirmen, - und so zu einer einfachen, kostengünstigen bzw. kostengünstig realisierbaren, effizienten und effektiven Werkzeugvermessung, (beispielsweise) bei einer Voreinstellung und/oder einem Werkzeugeinschrumpfen, führt.

Insbesondere sonst benötigte, zusätzliche Einrichtungen zu einer Werkzeugvermessung, wie zusätzliche Messmodule bzw. Messstative (vgl. DE 103 17 576 A1), können durch die Erfindung vermieden werden,
Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: ein kombiniertes Voreinstell- und Schrumpfgerät mit einem interaktiven Bildschirm mit einem virtuellen Messsystem (mit einem virtuellen Messschieber) zur Vermessung eines Werkzeugs gemäß einer Ausführung;
- FIG 2: den interaktiven Bildschirm mit einem virtuellen Messsystem (mit einem virtuellen Messschieber) zur Vermessung eines Werkzeugs gemäß einer Ausführung aus FIG 1.

### Werkzeugvoreinstellung mit virtuellem Messschieber (FIGen 1 und 2)

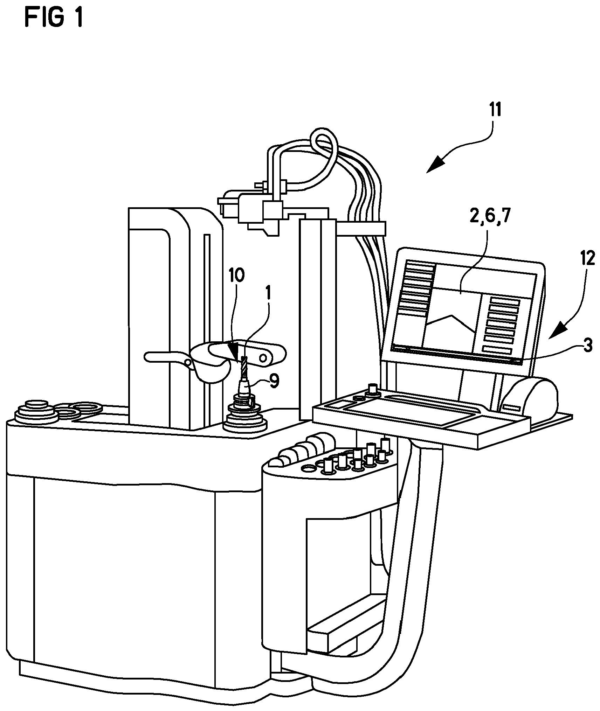

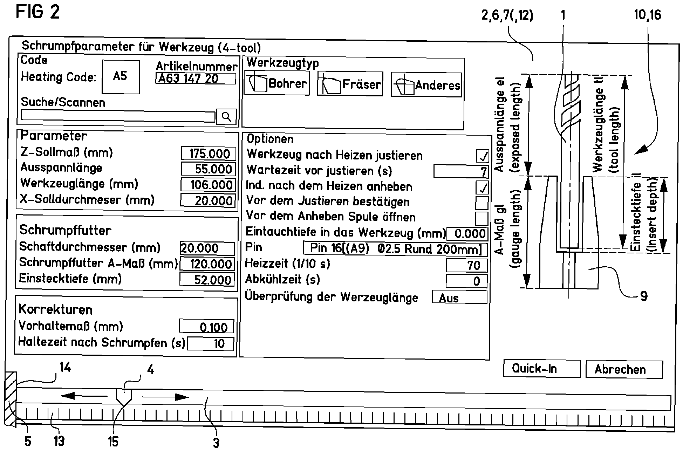

FIG 1 zeigt ein kombiniertes Voreinstell- und Schrumpfgerät 11 mit einem interaktiven Bildschirm 2 mit einem virtuellen Messsystem (mit einem virtuellen Messschieber 4) zur Vermessung eines Werkzeugs 1. FIG 2 zeigt - im Detail - diesen interaktiven Bildschirm 2 mit dem virtuellen Messsystem (mit dem virtuellen Messschieber 4) zur Vermessung eines Werkzeugs 1.

FIG 1 zeigt das kombinierte Voreinstell- und Schrumpfgerät 11, wie es - in seinen Grundfunktionen, "Voreinstellen" und "Schrumpfen", - üblich (und bekannt) ist (beispielsweise aus: https://www.haimer.de/produkte/voreinstelltechnik/voreinstell geraete-der-vio-baureihe/vio-linear-toolshrink.html, erhältlich dort am 07.02.2023).

Dieses kombinierte Voreinstell- und Schrumpfgerät 11 (kurz im Folgenden vereinfacht nur Voreinstellgerät 11) sieht als weitere Funktion (des Voreinstellgeräts 11) eine Werkzeugvermessung vor, bei welcher (beispielsweise vor einer Voreinstellung und/oder einem Einschrumpfen eines Werkzeugs 1 in eine Werkzeugaufnahme 9 durch das Voreinstellgerät 11) eine Vermessung des Werkzeugs 1 erfolgen kann.

Bei dieser Vermessung kann die axiale Länge eines Werkzeugs 1, hier ein Rotationswerkzeug 1, wie ein Fräswerkzeug 1, gemessen - und anschließend die gemessene axiale Länge des Werkzeugs 1 bei der Voreinstellung bzw. bei dem Einschrumpfen (des vermessenen Werkzeugs 1 in eine Werkzeugaufnahme 9) verwendet - werden.

Das Messgerät 2, welches diese Vermessung durchführt, ist, wie FIG 1 und insbesondere FIG 2 zeigen, der Bildschirm 2 des Voreinstellgeräts 11 unmittelbar und selbst.

Dazu wurde der Bildschirm 2 einerseits als interaktiver Bildschirm 2 mit berührempfindlicher Bildschirmoberfläche 6 eingerichtet, über welche sich (durch einen Benutzer (nicht gezeigt)) die (Ver-)Messung durchführen lässt; andererseits wurde der Bildschirm 2 selbst als unmittelbares Messmittel 2 - mit virtuellen Messinstrumenten - ausgestaltet - und so entsprechend (als Messmittel) ertüchtigt.

Wie FIG 2 erkennen lässt, befindet sich an einem unteren Ende des Bildschirms 2 bzw. der Bildschirmoberfläche 6 eine (angezeigte) virtuelle Messskala 3, eine Längenskala 3, mit einem in der Ebene der virtuellen Messskala 3 angeordneten, virtuellen Messschieber 4, welcher durch einen Benutzer - mittels Berührung mit der Bildschirmoberfläche 6, wie bei einem Touchscreen, - auf der virtuellen (und angezeigten) Messskala 3 verschoben werden kann.

Die Messskala 3 wurde derart kalibriert, dass ein dortiger (virtueller) Skalenabschnitt 13 einem vorgegeben (realen) Längenabschnitt (beispielsweise 5mm) entspricht.

Dadurch, dass der virtuelle Messschieber 3 in der Ebene der Messskala 4 liegt (und dort verschoben werden kann), wird ein diesbezüglich möglicher Parallaxenfehler (zwischen Zeiger und Skala, wie bei sonstigen physischen Zeigersystemen, bei welcher der Zeiger in räumlichen Abstand zur Messskala angeordnet ist,) vermieden.

Darüber hinaus wurde die virtuelle Messskala 3 derart am Bildschirm 2 positioniert bzw. angezeigt, dass ihr linker Anfangspunkt (Nullpunkt) an einem auf dem Bildschirm 2 angeordneten Anschlag 5 zu liegen kommt.

Kurz, einfach und anschaulich ausgedrückt, der Anschlag 5 auf dem Bildschirm 2 bildet auch den Anfang/Nullpunkt 14 der Messskala 3 - und so der "Messstrecke".

Eine hinter der Bildschirmoberfläche 6 liegende Sensorik 7 erfasst die Position des (virtuellen) Messschiebers 4 - und eine in einer Rechnereinheit 12 implementierte Logik errechnet - aus dem Nullpunkt 14 der (virtuellen) Messskala 3 und der Position des (virtuellen) Messschiebers 4 die (axiale) Länge der zu vermessenen Werkzeugs 1.

Bei der Vermessung eines Werkzeugs 1 wird dieses von einem Benutzer mit seinem ersten Ende, dem schaftseitigen Ende, - parallel zur Messskala 3 - an den Anschlag 5 angelegt. Der Benutzer bewegt, beispielsweise durch Berührung seines Fingers, den virtuellen Messschieber 4 an das zweite Ende des Werkzeugs 1, dem schneidenseitigen Ende, solange, bis die virtuelle Spitze 15 des Messschiebers 4 mit der schneidenseitigen Spitze des Werkzeugs 1 übereinstimmt.

Aus dem (bekannten) Nullpunkt 14 der (virtuellen) Messskala 3 und der Position des (virtuellen) Messschiebers 4 (bzw. dessen Spitze 15) wird die (axiale) Länge des zu vermessenen Werkzeugs 1 berechnet.

Der Messwert, d.h. die (axiale) Länge des vermessenen Werkzeugs 1, wird gespeichert, angezeigt und steht über eine Schnittstelle anderweitig zur Verfügung.

Eine in einem rechten oberen Bereich des Bildschirms 2 eingeblendete vereinfachte Darstellung 16 einer Werkzeug-Werkzeugaufnahme-Einheit 10 verdeutlicht wichtige Längen-/Abmessungsinformationen bei der Werkzeug-Werkzeugaufnahme-Einheit 10, wie die (axiale) Ausspannlänge (el (exposed length)), das A-Maß (gl (gauge length)), die Einstecktiefe (id (insert length)) und die (gemessene (axiale) Werkzeuglänge (tl (length)).

Verdeutlicht durch FIG 1 - kann so die gemessene (axiale) Länge des vermessenen Werkzeugs 1 bei einem Einschrumpfen des Werkzeugs 1 in eine Werkzeugaufnahme 9 (in eine vorgegebene Sollposition bzw. auf ein vorgegebenes Soll-Maß) auf dem Voreinstellgerät 11 verwendet werden.

Beispielsweise kann ein Anschlagelement im Inneren der Werkzeugaufnahme 9 vor dem Einschrumpfen des Werkzeuges 1 unter Berücksichtigung der Werkzeuglänge tl so positioniert werden, dass sich nach dem Einschrumpfen eine vorgegebene Ausspannlänge el ergibt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste:

- 1: Werkzeug, Rotationswerkzeug, Fräs-/Bohrwerkzeug
- 2: (interaktiver) Bildschirm, Messmittel/-system
- 3: (virtuelle) Messskala, Längenskala
- 4: (virtueller) Messschieber
- 5: (physischer) Anschlag
- 6: Bildschirmoberfläche
- 7: Sensorik
- 8: Referenzkörper (nicht gezeigt)
- 9: Werkzeugaufnahme, Werkzeughalter

- 10: Werkzeug-Werkzeugaufnahme-Einheit
- 11: Voreinstell-/Schrumpfgerät
- 12: Recheneinheit
- 13: Skalenabschnitt
- 14: Nullpunkt, linker Anfangspunkt
- 15: (virtuelle) Spitze (von 4)
- 16: Darstellung (von 10)

- el (exposed length): (axiale) Ausspannlänge
- gl (gauge length): A-Maß
- id (insert length): Einstecktiefe
- tl (tool length): zu vermessende/gemessene (axiale) Werkzeuglänge

## Patentansprüche

1. **Verfahren** zum Vermessen eines Werkzeuges (1) unter Verwendung eines Bildschirms (2),
**dadurch gekennzeichnet, dass**
das Werkzeug (1) unter Verwendung des Bildschirms (2) als Messmittel vermessen wird.

2. **Verfahren** zum Vermessen eines Werkzeuges (1) nach einem der voranstehenden Ansprüche,
**dadurch gekennzeichnet, dass**
der Bildschirm (2) eine Messskala (3) aufweist, insbesondere an dem Bildschirm (2) eine Messskala (3) angeordnet ist und/oder auf dem Bildschirm (2) eine virtuelle Messskala (3) angezeigt wird, unter Verwendung derer das Werkzeug (1) vermessen wird.

3. **Verfahren** zum Vermessen eines Werkzeuges (1) nach einem der voranstehenden Ansprüche,
**dadurch gekennzeichnet, dass**
der Bildschirm (2) einen Messschieber (4) aufweist, unter Verwendung dessen das Werkzeug (1) vermessen wird.

4. **Verfahren** zum Vermessen eines Werkzeuges (1) nach einem der voranstehenden Ansprüche,
**dadurch gekennzeichnet, dass**
der Messschieber (4) ein virtueller Messschieber (4) ist, welcher auf dem Bildschirm (2) angezeigt und/oder interaktiv bedient wird, oder der Messschieber (4) ein Messschieber (4) ist, welcher mechanisch verschiebbar ist.

5. **Verfahren** zum Vermessen eines Werkzeuges (1) nach einem der voranstehenden Ansprüche,
**dadurch gekennzeichnet, dass**
der Bildschirm (2) einen, insbesondere physischen, Anschlag (5) aufweist, unter Verwendung dessen das Werkzeug (1) für die Vermessung positionierbar ist.

6. **Verfahren** zum Vermessen eines Werkzeuges (1) nach einem der voranstehenden Ansprüche,
**dadurch gekennzeichnet, dass**
eine Bildschirmoberfläche (6) des Bildschirms (2) derart mit einer Sensorik (7), insbesondere einer berührempfindlichen Sensorik (7), eingerichtet ist, dass, wenn das Werkzeug (1) mit der Bildschirmoberfläche (6) in Kontakt gebracht ist, das Werkzeug (1) automatisch vermessen wird.

7. **Verfahren** zum Vermessen eines Werkzeuges (1) nach einem der voranstehenden Ansprüche,
**dadurch gekennzeichnet, dass**
bei der Vermessung das Werkzeug (1) in Kontakt mit dem Bildschirm (2), insbesondere einer Bildschirmoberfläche (6), gebracht wird und/oder das Werkzeug (1) bei der Vermessung in Kontakt mit dem Bildschirm (2), insbesondere einer Bildschirmoberfläche (6), steht.

8. **Verfahren** zum Vermessen eines Werkzeuges (1) nach einem der voranstehenden Ansprüche,
**dadurch gekennzeichnet, dass**
bei der Vermessung des Werkzeugs (1) zusätzlich ein Parallaxenfehler vermieden und/oder korrigiert wird.

9. **Verfahren** zum Vermessen eines Werkzeuges (1) nach einem der voranstehenden Ansprüche,
**dadurch gekennzeichnet, dass**
das Messmittel (2), insbesondere unter Verwendung eines Referenzkörpers (8), kalibriert wird.

10. **Verfahren** zum Vermessen eines Werkzeuges (1) nach einem der voranstehenden Ansprüche,
durchgeführt bei einer Werkzeugvoreinstellung und/oder einem Einspannen, insbesondere Einschrumpfen, eines Werkzeugs (1) in eine Werkzeugaufnahme (9), wobei das Einspannen unter Verwendung der durch das Verfahren gemessenen Länge des Werkzeugs (1) durchgeführt wird.

11. **Verfahren** zum Montieren eines Werkzeugs (1) in einem Werkzeughalter (9),
bei dem
das Werkzeug (1) nach einem der voranstehenden Verfahrensansprüche vermessen wird, insbesondere eine axiale Werkzeuglänge (tl) des Werkzeugs (1) gemessen wird, ein Anschlagselement im Werkzeughalter (5) unter Verwendung des Messergebnisses, insbesondere der axialen Länge (tl), positioniert wird, das Werkzeug (1) auf Anschlag an das Anschlagselement in den Werkzeughalter (9) eingeführt wird und das Werkzeug (1) in der eingeführten Position im Werkzeughalter (9) befestigt wird.

12. **Bildschirm (2),** insbesondere interaktiver Bildschirm (2),
**dadurch gekennzeichnet, dass**
der Bildschirm (2) als Messmittel zum Vermessen eines Werkzeugs (1) eingerichtet ist.

13. **Bildschirm (2)** nach einem der voranstehenden Ansprüche,
**dadurch gekennzeichnet, dass**
der Bildschirm (2) eine Messskala (3) aufweist, insbesondere an dem Bildschirm (2) eine Messskala (3) angeordnet ist und/oder auf dem Bildschirm (2) eine virtuelle Messskala (3) angezeigt wird, unter Verwendung derer das Werkzeug (1) vermessbar ist.

14. **Bildschirm (2)** nach einem der voranstehenden Ansprüche,
**dadurch gekennzeichnet, dass**
der Bildschirm (2) einen Messschieber (4) aufweist, unter Verwendung dessen das Werkzeug (1) vermessbar ist.

15. **Bildschirm (2)** nach einem der voranstehenden Ansprüche,
**dadurch gekennzeichnet, dass**
der Messschieber (4) ein virtueller Messschieber (4) ist, welcher auf dem Bildschirm (2) anzeigbar und interaktiv bedienbar ist, oder der Messschieber (4) ein Messschieber (4) ist, welcher mechanisch verschiebbar ist.

16. **Bildschirm (2)** nach einem der voranstehenden Ansprüche,
**dadurch gekennzeichnet, dass**
der Bildschirm (2) einen, insbesondere physischen, Anschlag (5) aufweist, unter Verwendung dessen das Werkzeug (1) für die Vermessung positionierbar ist.

17. **Bildschirm (2)** nach einem der voranstehenden Ansprüche,
**dadurch gekennzeichnet, dass**
eine Bildschirmoberfläche (6) des Bildschirms (2) derart mit einer Sensorik (7), insbesondere einer berührempfindlichen Sensorik (7), eingerichtet ist, dass, wenn das Werkzeug (2) mit der Bildschirmoberfläche (6) in Kontakt bringbar ist, das Werkzeug (1) automatisch vermessbar ist.

18. **Bildschirm (2)** nach einem der voranstehenden Ansprüche,
**dadurch gekennzeichnet, dass**
Mittel vorgesehen sind, unter Verwendung derer bei der Vermessung des Werkzeugs (1) zusätzlich ein Parallaxenfehler vermeidbar und/oder korrigierbar ist.

19. **Bildschirm (2)** nach einem der voranstehenden Ansprüche,
**gekennzeichnet, durch**
einen Referenzkörper (8), unter Verwendung dessen eine Kalibrierung des Messsystems (2) durchführbar ist.

20. **Verwendung** eines Bildschirms (2) nach einem der voranstehenden Ansprüche zu einer Vermessung eines Werkzeugs (1), insbesondere durchgeführt bei einer Werkzeugvoreinstellung und/oder einem Einschrumpfen eines Werkzeugs (1) in eine Werkzeugaufnahme (9), wobei das Einschrumpfen unter Verwendung der durch das Vermessen gemessenen Größe des Werkzeugs (1), insbesondere einer gemessenen axialen Länge des Werkzeugs (1), durchgeführt wird.

21. **Recheneinheit (12)** aufweisend einen Bildschirm (2) nach einem der voranstehenden Ansprüche.

22. **Voreinstellgerät und/oder Schrumpfgerät (11)** mit einem Bildschirm (2) nach einem der voranstehenden Ansprüche.

23. **Verwendung** eines Bildschirms (2) als Messmittel für ein Vermessen eines Werkzeugs (1), insbesondere durchgeführt bei einer Werkzeugvoreinstellung und/oder einem Einschrumpfen eines Werkzeugs (1) in eine Werkzeugaufnahme (9), wobei das Einschrumpfen unter Verwendung der durch das Vermessen gemessenen Größe des Werkzeugs (1), insbesondere einer gemessenen axialen Länge des Werkzeugs (1), durchgeführt wird.
